# FASCICULE DE BREVET EUROPEEN

(11) **EP 3 871 373 B1**
(45) Date de publication et mention de la délivrance du brevet: **11.01.2023**
(21) Numéro de dépôt: 19804764.9
(22) Date de dépôt: 04.10.2019
(51) Int. Cl.: H04L 41/082, G06F 8/65

(54) **PROCÉDÉ DE GESTION D'ÉQUIPEMENT EN VUE DE METTRE À JOUR UN MICROLOGICIEL**
VERFAHREN ZUR VERWALTUNG VON GERÄTEN ZUR AKTUALISIERUNG EINER FIRMWARE
METHOD FOR MANAGING EQUIPMENT IN ORDER TO UPDATE A FIRMWARE

(30) Priorité: 26.10.2018 FR 1859912
(43) Date de publication de la demande: 01.09.2021
(73) Titulaire: Orange, 92130 Issy-les-Moulineaux (FR)
(72) Inventeur: GLOANEC, Simon, 92326 CHÂTILLON CEDEX (FR); MARCHAND, Hervé, 92326 CHÂTILLON CEDEX (FR)
(86) Numéro de dépôt international: PCT/FR2019/052356
(87) Numéro de publication internationale: WO 2020/084216

(56) Documents cités:
- WO-A1-2006/131077
- US-A1- 2005 186 952
- US-A1- 2014 286 354

## Description

Le domaine de l'invention se rapporte au déploiement d'une mise à jour d'un micrologiciel (connu également sous le terme anglophone «*firmware*») au sein d'un équipement de connexion à un réseau, par exemple un routeur. Le réseau est par exemple un réseau étendu de type Internet.

Pour permettre à un client ou à une entreprise de se connecter à un réseau et, ainsi, d'accéder au contenu disponible sur ce réseau, un opérateur met à disposition du client ou de l'entreprise un ou plusieurs équipements de connexion au réseau. Ces équipements, plus connus sous l'acronyme anglophone CPE (« *Customer-Premises Equipment* » ou « *Customer-Provided Equipment* ») sont alors localisés à proximité du client ou de l'entreprise et sont raccordés à l'infrastructure de l'opérateur dans un point de présence (connu aussi sous l'acronyme anglophone PoP pour *«Point of Presence* ») via une boucle locale.

L'opérateur est chargé de la gestion et de l'administration d'un nombre souvent important de ces équipements. En particulier, la supervision de ces équipements peut impliquer la mise à jour des micrologiciels implémentés dans ces équipements. Cette supervision est par ailleurs assurée par un serveur de gestion, aussi appelé serveur d'auto-configuration. Or, la mise à jour des équipements rend ces derniers indisponibles pendant la durée de téléchargement. Ainsi, pendant la mise à jour du micrologiciel d'un équipement, le client ou l'entreprise disposant de cet équipement n'a pas la possibilité d'accéder au contenu accessible sur le réseau et doit donc attendre la fin de la mise à jour. Pour éviter ces désagréments, les opérateurs font souvent le choix de programmer ces mises à jour la nuit sur la plage horaire la plus courte possible, donc pendant une période où un équipement est le moins susceptible d'être sollicité.

Néanmoins, comme expliqué précédemment, un opérateur administre un nombre important d'équipements de sorte que la mise à jour de ces derniers simultanément induit une charge élevée sur les serveurs. Les opérateurs sont donc contraints de dimensionner les serveurs pour pouvoir respecter la contrainte d'une plage horaire de téléchargement de la mise à jour fixe et commune à tous les équipements.

Par ailleurs, une plage horaire fixe est indépendante des habitudes et usages des utilisateurs de ces équipements, de sorte que certains utilisateurs, parfois amenés à se connecter au réseau pendant cette plage horaire, ne peuvent alors pas accéder au réseau du fait de la mise à jour. US 2005/186952 A1 est partie de l'art antérieur.

La présente invention vient améliorer la situation.

A cet effet, il est proposé un procédé de gestion à distance d'un ensemble d'au moins un équipement de connexion à un réseau en vue de mettre à jour un micrologiciel au sein de chaque équipement. Le procédé est mis en œuvre par des moyens informatiques et comprend:
- générer, au niveau de chaque équipement, des données de connexion de l'équipement au réseau sur une période de temps prédéterminée,
- déterminer, au niveau d'un serveur de gestion distant, une plage horaire, propre à chaque équipement, de mise à jour du micrologiciel, la plage horaire propre à un équipement étant fonction au moins des données de connexion de l'équipement,
- transmettre, à chaque équipement, une information relative à la plage horaire qui lui est propre,
- transmettre, à chaque équipement, une information relative à une adresse d'un serveur de téléchargement en vue de mettre à jour le micrologiciel au sein de chaque équipement,
- émettre, en provenance de chaque équipement, une requête de téléchargement de la mise à jour du micrologiciel à destination du serveur de téléchargement associé à l'adresse reçue,
- émettre, en provenance du serveur de téléchargement, des données de téléchargement de la mise à jour du micrologiciel à destination de chaque équipement émetteur d'une requête de téléchargement, et
- télécharger, au sein de chaque équipement récepteur des données de téléchargement, la mise à jour du micrologiciel pendant la plage horaire propre à chaque équipement.

La détermination d'une plage horaire de téléchargement de la mise à jour propre à l'équipement de connexion au réseau permet de réduire la charge sur le serveur de téléchargement. Ainsi, la mise à jour des micrologiciels respectifs des nombreux équipements peut être étalée dans le temps de sorte que les capacités du serveur de téléchargement sont moins sollicitées. Par ailleurs, la détermination d'une plage horaire propre à chaque équipement permet de personnaliser la procédure de mise à jour du micrologiciel et, avantageusement, de ne mobiliser l'équipement que sur une plage horaire au cours de laquelle l'équipement a l'habitude d'être peu ou pas sollicité par un utilisateur.

Selon un aspect de l'invention, les données de connexion générées par un équipement sont transmises à intervalles de temps réguliers au serveur de gestion, chaque intervalle de temps correspondant à la période de temps prédéterminée.

Alternativement, les données de connexion générées par un équipement au cours d'une pluralité de périodes de temps prédéterminées sont associées à un profil au niveau de l'équipement, le profil étant sélectionné dans une mémoire stockant des profils prédéterminés puis transmis au serveur de gestion.

Un tel mode de réalisation permet d'éviter de multiplier les échanges entre l'équipement et le serveur de gestion et ainsi d'éviter de surcharger le réseau. En effet, dans une telle alternative, les données de connexion d'un équipement sont directement exploitées par cet équipement et mises en regard, au sein d'une mémoire, avec des profils prédéterminés. Le profil obtenu est ensuite envoyé au serveur de gestion, lequel obtient alors directement des informations sur les périodes de forte/faible consommation de l'équipement auquel est associé le profil.

Selon un aspect de l'invention, la transmission à un équipement de l'information relative à l'adresse du serveur de téléchargement est consécutive à l'émission, en provenance de l'équipement, d'une requête d'ouverture de session à destination du serveur de gestion, la requête d'ouverture de session étant émise sur détection, par l'équipement, du début de la plage horaire propre à l'équipement.

Selon un autre aspect de l'invention, le ou les équipements et le serveur de gestion communiquent selon le protocole de communication TR-069. Les données de connexion sont par exemple transmises au serveur de gestion dans une « *inform request* » du protocole TR-069.

Selon un autre aspect de l'invention, les données de connexion générées au niveau d'un équipement sont relatives à un ou plusieurs horaires de connexion de l'équipement au réseau au cours de la période de temps prédéterminée.

Selon un autre aspect de l'invention, les données de connexion générées au niveau d'un équipement sont relatives à une quantité de données reçues par l'équipement en provenance du réseau au cours de la période de temps prédéterminée.

Selon un mode de réalisation, la plage horaire propre à un équipement est déterminée en fonction de capacités du serveur de téléchargement S_DWL relatives à un débit maximal de transmission de données du serveur de téléchargement S_DWL.

Selon un autre aspect de l'invention, l'ensemble d'au moins un équipement comprend au moins deux équipements, la plage horaire propre à un équipement étant déterminée en outre en fonction des données de connexion de l'autre ou des autres équipements.

Bien souvent, plusieurs équipements, présents chez des clients différents, doivent être mis à jour à distance. La multiplication des équipements induit, dans l'art antérieur, une charge importante sur le serveur de téléchargement et celui-ci doit donc être dimensionné en conséquence. Dans le contexte de la présente invention, chaque équipement se voit attribuer une plage horaire qui lui est propre pour télécharger la mise à jour. Néanmoins, il peut arriver que plusieurs équipements partagent, au moins en partie, une plage horaire de sorte que la charge sur le serveur de téléchargement peut être augmentée sur les périodes de temps concernées, notamment quand les plages horaires de téléchargement se chevauchent. Il est donc avantageux, pour déterminer la plage horaire de téléchargement assignée à un équipement en particulier, de tenir compte non seulement des données de connexion de cet équipement mais aussi des données de connexion des autres équipements (ou de l'autre équipement dans le cas où seul deux équipements sont considérés en tout).

Dans un ou plusieurs modes de réalisation, la détermination de la plage horaire de mise à jour du micrologiciel propre à chaque équipement comprend :
- calculer, pour chaque équipement et pour chaque plage horaire d'une pluralité de plages horaires potentielles, une valeur d'un paramètre représentatif d'une utilisation de l'équipement pendant la plage horaire considérée en fonction des données de connexion générées par l'équipement,
- sélectionner, pour chaque équipement, la plage horaire correspondant à la plus faible utilisation de l'équipement, l'ensemble des plages horaires sélectionnées formant un *planning* de mise à jour de l'ensemble d'équipements,
- déterminer, en chaque instant d'une pluralité d'instants du *planning,* un indice représentatif d'une sollicitation potentielle du serveur de téléchargement audit instant, l'indice en question étant fonction des valeurs respectives de plages horaires sélectionnées comprenant ledit instant, et
- lorsque l'indice est supérieur à un seul prédéterminé en un instant donné du *planning,* remplacer une des plages horaires comprenant l'instant donné par une autre plage horaire, cette autre plage horaire étant sélectionnée en fonction de la valeur du paramètre représentatif d'une utilisation de l'équipement concerné pendant cette autre plage horaire.

Selon un aspect de l'invention, la valeur du paramètre représentatif d'une utilisation d'un équipement pendant une plage horaire donnée est calculée en fonction au moins de la quantité de données reçues par l'équipement pendant la plage horaire.

L'invention concerne en outre un programme informatique comprenant des instructions pour la mise en œuvre du procédé précédent, lorsque les instructions sont exécutées par au moins un processeur.

Par ailleurs, l'invention concerne également un équipement de connexion à un réseau comprenant un micrologiciel, l'équipement comprenant en outre un processeur et un module de communication configurés pour :
- générer des données de connexion de l'équipement au réseau sur une période de temps prédéterminée,
- recevoir une information relative à une plage horaire, propre à l'équipement, de téléchargement d'une mise à jour d'un micrologiciel au sein de l'équipement,
- recevoir une information relative à une adresse d'un serveur de téléchargement en vue de télécharger la mise à jour du micrologiciel,
- émettre une requête de téléchargement de la mise à jour du micrologiciel à destination du serveur de téléchargement associé à l'adresse reçue,
- recevoir, en provenance du serveur de téléchargement, des données de téléchargement de la mise à jour du micrologiciel, et
- télécharger la mise à jour du micrologiciel pendant la plage horaire propre à l'équipement.

L'invention concerne aussi un serveur de gestion à distance d'un ensemble d'au moins un équipement de connexion à un réseau en vue de mettre à jour un micrologiciel au sein de chaque équipement. Le serveur de gestion est configuré pour:
- recevoir, en provenance de chaque équipement, des données de connexion de l'équipement au réseau sur une période de temps prédéterminée,
- déterminer une plage horaire, propre à chaque équipement, de mise à jour du micrologiciel, la plage horaire propre à un équipement étant fonction au moins des données de connexion de l'équipement,
- transmettre, à chaque équipement, une information relative à la plage horaire propre à l'équipement, et
- transmettre, à chaque équipement, une information relative à une adresse d'un serveur de téléchargement en vue de télécharger la mise à jour du micrologiciel au sein de chaque équipement pendant la plage horaire propre à chaque équipement.

Enfin, l'invention concerne un système comprenant un ensemble d'au moins un équipement de connexion à un réseau tel que décrit précédemment et un serveur de gestion à distance de l'ensemble d'au moins un équipement de connexion au réseau tel que décrit précédemment.

Selon un aspect de l'invention, le système comprend en outre un serveur de téléchargement configuré pour, sur réception d'une requête de téléchargement de la mise à jour du micrologiciel émise par un équipement de l'ensemble d'au moins un équipement, émettre des données de téléchargement de la mise à jour du micrologiciel à destination dudit équipement.

D'autres caractéristiques, détails et avantages de l'invention apparaîtront à la lecture de la description détaillée ci-après, et à l'analyse des dessins annexés, sur lesquels :
- La Figure 1 illustre un système selon l'invention comprenant un équipement de connexion à un réseau, un serveur de gestion à distance d'un ensemble d'au moins un équipement et un serveur de téléchargement ; et
- La Figure 2 illustre un procédé de gestion à distance d'un ensemble d'au moins un équipement de connexion à un réseau selon l'invention.

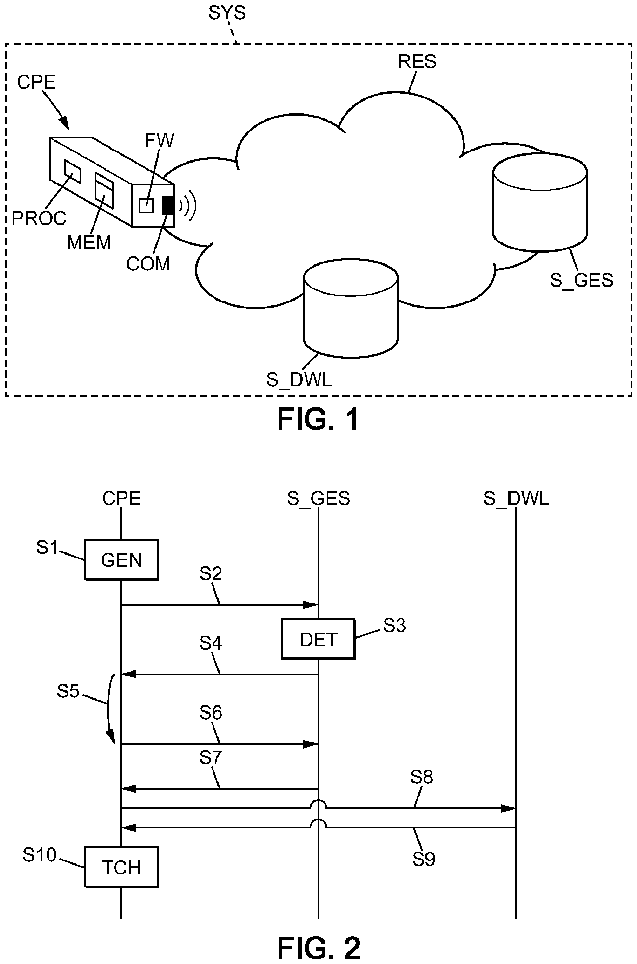

La Figure 1 illustre un système SYS selon l'invention.

Le système SYS comprend un équipement CPE de connexion à un réseau RES, un serveur de gestion, aussi appelé serveur d'auto-configuration, S_GES à distance d'un ensemble d'au moins un équipement, ici l'équipement CPE seul, et un serveur de téléchargement S_DWL.

Dans le mode de réalisation illustré en Figure 1, un seul équipement CPE est représenté. Néanmoins, comme expliqué dans la suite de la description, plusieurs équipements tels que l'équipement CPE représentés sont aptes à se connecter au réseau RES et à communiquer avec le serveur de gestion S_GES et avec le serveur de téléchargement S_DWL.

L'équipement CPE est configuré pour se connecter au réseau RES. Le réseau RES est par exemple un réseau étendu de type Internet. Néanmoins, le réseau RES peut également être un réseau local ou tout autre type de réseau. Typiquement, l'équipement CPE est localisé à proximité de l'utilisateur, par exemple un client ou une entreprise. Par exemple, l'équipement CPE est raccordé à l'infrastructure de l'opérateur auprès duquel l'utilisateur a souscrit un abonnement, dans un point de présence (connu aussi sous l'acronyme anglophone PoP pour « *Point of Presence* »), via une boucle locale. L'équipement CPE est aussi connu sous l'acronyme anglophone CPE (« *Customer-Premises Equipment »* ou « *Customer-Provided Equipment* »)*.*

L'équipement CPE est par exemple un routeur raccordé en IP (acronyme anglophone pour « *Internet Protocol* ») dans le cadre d'un service de IP VPN (acronyme anglophone pour « *Internet Protocol Virtual Private Network* ») fourni par un opérateur. L'équipement CPE peut également être un routeur raccordé en FR (acronyme anglophone pour « *Frame Relay* ») dans le cadre d'un service de FR VPN (acronyme anglophone pour « *Frame Relay Virtual Private Network* ») fourni par un opérateur. Outre un routeur, l'équipement CPE peut désigner d'autres appareils tels qu'un téléphone fixe, un commutateur réseau, une plateforme domestique communément appelée *box* Internet (connue aussi sous l'acronyme anglophone RG pour « *Residential Gateway* »), un boîtier décodeur (aussi connu sous le terme anglophone STB pour « *Set-Top box* ») ou encore un adaptateur de terminal analogique.

Par ailleurs, l'équipement CPE est agencé pour générer des données de connexion au réseau RES sur une période de temps prédéterminée. En d'autres termes, l'équipement CPE est agencé pour générer et stocker des données représentatives d'un usage actif ou passif de l'utilisateur du réseau RES pendant une période de temps prédéterminée.

Par exemple, les données de connexion générées au niveau de l'équipement CPE sont relatives à un ou plusieurs horaires de connexion de l'équipement CPE au réseau RES au cours de la période de temps prédéterminée. Les données de connexion générées au niveau de l'équipement CPE peuvent également être relatives à une quantité de données reçues par l'équipement CPE en provenance du réseau RES au cours de la période de temps prédéterminée.

Typiquement, si l'utilisateur de l'équipement CPE se connecte au réseau RES à un horaire précis pendant la période de temps prédéterminée et reste connecté pendant une certaine durée, les données de connexion générées par l'équipement CPE seront relatives à de telles informations. De même, si ce même utilisateur reçoit, via l'équipement CPE, une quantité de données, exprimée par exemple en octets, pendant la période de temps prédéterminée, les données de connexion générées par l'équipement CPE peuvent également être relatives à cette information. Plus généralement, les données de connexion générées par l'équipement CPE sont caractéristiques de la sollicitation ou de l'utilisation de cet équipement pendant une période de temps prédéterminées. De telles données permettent de déterminer si, au cours d'une période de temps donnée, l'équipement CPE a été beaucoup sollicité pour se connecter au réseau RES ou, à l'inverse, s'il a été peu ou pas sollicité pour se connecter au réseau RES.

Comme illustré en Figure 1, l'équipement CPE comprend un micrologiciel FW, une mémoire MEM, un processeur PROC et un module de communication COM.

Le micrologiciel FW (connu également sous le terme anglophone « *firmware* ») est un programme informatique intégré à l'équipement CPE et est agencé pour mettre en œuvre une ou plusieurs fonctionnalités au sein de l'équipement CPE. Le micrologiciel FW peut également être appelé microcode, logiciel interne ou encore logiciel embarqué. Comme expliqué dans la suite de la description, la présente invention vise un procédé permettant de mettre à jour le micrologiciel FW afin de modifier une fonctionnalité existante ou d'intégrer une ou plusieurs nouvelles fonctionnalités au sein de l'équipement CPE. On comprend ici que le micrologiciel FW permet de modifier le fonctionnement et les fonctionnalités de l'équipement CPE sans en modifier ou remplacer les composants informatiques et électroniques.

La mémoire MEM est agencée pour stocker des instructions sous la forme d'un programme informatique dont l'exécution par le processeur PROC se traduit par le fonctionnement de l'équipement CPE. Par exemple, les instructions du programme informatique correspondant au micrologiciel FW peuvent être stockées dans la mémoire MEM. Avantageusement, la mémoire MEM est agencée en outre pour stocker les données de connexion générées par l'équipement CPE, et plus précisément par le processeur PROC. La mémoire MEM est, par exemple, une mémoire non volatile. Alternativement, la mémoire MEM est une mémoire volatile.

Par ailleurs, selon un mode de réalisation, la mémoire MEM est agencée en outre pour stocker un ensemble de profils prédéterminés, de sorte que les données de connexion générées au niveau de l'équipement CPE au cours d'une pluralité de périodes de temps prédéterminées sont associées à un profil de l'ensemble de profils prédéterminés. En d'autres termes, il est possible d'associer un profil préexistant et stocké dans la mémoire MEM à des données de connexion générées par l'équipement CPE.

Le module de communication COM est agencé pour communiquer avec le serveur de gestion S_GES et le serveur de téléchargement S_DWL. Dans l'exemple illustré en **Figure** 1, le module de communication COM communique avec le serveur de gestion S_GES et le serveur de téléchargement S_DWL via le réseau RES.

En particulier, le module de communication COM est agencé en outre pour émettre les données de connexion générées au niveau de l'équipement CPE à destination du serveur de gestion S_GES. Comme expliqué précédemment, les données de connexion peuvent être, selon un mode de réalisation, associées à un profil prédéterminé au niveau de la mémoire MEM, le profil en question correspondant à des données de connexion générées au cours d'une pluralité de périodes de temps prédéterminées. Dans un tel mode de réalisation, le module de communication COM est agencé pour transmettre le profil obtenu à destination du serveur de gestion S_GES.

Comme expliqué dans la suite de la description, le logiciel FW peut être mis à jour grâce à des données de téléchargement émises par le serveur de téléchargement S_DWL. Le module de communication COM est ainsi configuré en outre pour émettre une requête de téléchargement de la mise à jour du micrologiciel FW à destination du serveur de téléchargement S_DWL. Le module de communication COM est configuré en outre pour recevoir les données de téléchargement en provenance du serveur de téléchargement S_DWL.

Selon un mode de réalisation, l'équipement CPE et le serveur de gestion communiquent selon le protocole de communication TR-069. Dans ce cas, les données de connexion générées par l'équipement CPE sont transmises au serveur de gestion S_GES dans une « *inform request* » par exemple. Par ailleurs, les données de connexion peuvent être transmises au serveur de gestion S_GES à d'autres occasions au cours des sessions du protocole TR-069. Par exemple, les données de connexion peuvent être stockées dans un paramètre du modèle de données (plus connu sous le terme anglophone « *data model* »), le serveur de gestion S_GES pouvant accéder à des données via une requête *GetParameterValues.* Les données de connexion peuvent aussi être enregistrées dans un fichier dont le téléversement est contrôlé par le serveur de gestion S_GES à l'aide de requêtes (appelées aussi requêtes *d'upload*) envoyées par le serveur de gestion S_GES lors des sessions. La transmission des données de connexion par l'équipement CPE à destination du serveur de gestion S_GES peut donc être réalisée de différentes manières lors d'une session du protocole TR-069, l'utilisation d'une *inform request* étant une alternative possible parmi d'autres.

Le fonctionnement de l'équipement CPE, et plus spécifiquement ses interactions avec le serveur de gestion S_GES et le serveur de téléchargement S_DWL, sera expliqué plus en détail dans la suite de la description en référence à la **Figure 2****.**

Le serveur de gestion S_GES est configuré pour gérer, ou superviser, à distance un ensemble d'au moins un équipement de connexion au réseau RES en vue de mettre à jour le micrologiciel FW au sein de chaque équipement. Dans l'exemple illustré en **Figure 1**, un seul équipement, en l'occurrence l'équipement CPE, est illustré. Néanmoins, l'homme du métier comprend que l'ensemble d'au moins un équipement peut comprendre plusieurs équipements, donc au moins deux équipements tels que l'équipement CPE détaillé précédemment.

Le serveur de gestion S_GES est également appelé serveur d'auto-configuration dans la littérature concernant ce domaine technique.

Le serveur de gestion S_GES est configuré en outre pour déterminer une plage horaire, propre à chaque équipement CPE, de mise à jour du micrologiciel FW. La plage horaire propre à un équipement est déterminée en fonction au moins des données de connexion de l'équipement considéré. En d'autres termes, dans l'exemple illustré en **Figure 1****,** le serveur de gestion S_GES est configuré pour déterminer, en fonction au moins des données de connexion générées par l'équipement CPE, la plage horaire au cours de laquelle il plus avantageux pour l'équipement CPE de procéder à la mise à jour du micrologiciel FW

Dans un mode de réalisation, l'ensemble d'au moins un équipement comprend plusieurs équipements, donc au moins deux équipements tels que l'équipement CPE. Avantageusement, dans un tel mode de réalisation, la plage horaire propre à un équipement, par exemple l'équipement CPE, est déterminée en outre en fonction des données de connexion des autres équipements. En d'autres termes, pour un équipement donné de l'ensemble d'équipements, la plage horaire, propre à cet équipement, déterminée par le serveur de gestion S_GES est déterminée en fonction non seulement des données de connexion propre à l'équipement considéré mais aussi des données de connexion générées par les équipements distincts de l'équipement considéré.

Par exemple, dans le mode de réalisation dans lequel les données de connexion d'un équipement générées au cours d'une pluralité de période de temps prédéterminées sont associées à un profil prédéterminé au niveau de l'équipement, la plage horaire, propre à cet équipement, est déterminée en fonction du profil obtenu de l'équipement considéré et en fonction également des profils respectifs des autres équipements.

Selon un mode de réalisation, la plage horaire propre à un équipement est déterminée en fonction de capacités du serveur de téléchargement S_DWL relatives à un débit maximal de transmission de données du serveur de téléchargement S_DWL.

Le serveur de gestion S_GES est configuré en outre pour transmettre, à chaque équipement, une information relative à la plage horaire propre à l'équipement considéré. Le serveur de gestion S_GES est agencé en outre pour transmettre, à chaque équipement, une information relative à une adresse du serveur de téléchargement S_DWL en vue de télécharger la mise à jour du micrologiciel FW au sein de chaque équipement pendant la plage horaire propre à chaque équipement.

Le serveur de gestion S_GES est par exemple un serveur matériel comprenant une mémoire (non représentée) agencée pour stocker les adresses respectives de chaque équipement et des moyens de communication pour émettre/recevoir des données à destination/en provenance de chaque équipement.

Le serveur de téléchargement S_DWL est configuré pour émettre des données de téléchargement de la mise à jour du micrologiciel FW à destination de chaque équipement émetteur d'une requête de téléchargement.

L'homme du métier comprend que le serveur de téléchargement S_DWL permet à l'opérateur auprès duquel l'utilisateur de l'équipement CPE a souscrit un abonnement de mettre à jour ou d'ajouter des fonctionnalités à l'équipement CPE. En d'autres termes, dès sa connexion au réseau RES, l'équipement CPE est susceptible d'entrer en communication avec le serveur de téléchargement S_DWL afin que le micrologiciel FW intégré à l'équipement CPE puisse être mis à jour lorsque l'opérateur le souhaite.

Sur la **Figure 1****,** le serveur de gestion S_GES et le serveur de téléchargement S_DWL apparaissent comme des serveurs distincts avec des rôles différents. Néanmoins, on comprend que le serveur de gestion S_GES et le serveur de téléchargement S_DWL peuvent être un seul et même serveur assurant le rôle de serveur de gestion S_GES et de serveur de téléchargement S_DWL.

Un procédé de gestion à distance d'un ensemble d'au moins un équipement de connexion, tel que l'équipement CPE, au réseau RES va maintenant être décrit en référence à la **Figure 2**.

Dans le contexte de la mise en œuvre du procédé décrit ci-après, l'équipement CPE est localisé à proximité de l'utilisateur, par exemple un client ou une entreprise. L'utilisateur est amené, au cours de la journée, à utiliser l'équipement CPE pour se connecter au réseau RES. Le réseau RES est par exemple un réseau étendu de type Internet. Le réseau RES peut également être un réseau local ou tout autre type de réseau. L'équipement CPE comprend un micrologiciel FW permettant de réaliser une ou plusieurs fonctionnalités. Le micrologiciel FW est destiné à être mis à jour régulièrement pour modifier des fonctionnalités déjà existantes ou pour intégrer de nouvelles fonctionnalités. Cette mise à jour est réalisée grâce au serveur de gestion S_GES et au serveur de téléchargement S_DWL.

Par ailleurs, le procédé décrit ci-après fait référence à l'équipement CPE illustré en **Figure 1****.** Néanmoins, on comprend que ce procédé est avantageusement mis en œuvre pour une pluralité d'équipement CPE connecté au réseau RES.

Lors d'une étape S1, l'équipement CPE génère des données de connexion au réseau RES sur une période de temps prédéterminée. Plus spécifiquement, ces données de connexion sont générées par le processeur PROC de l'équipement CPE. L'information de cette période de temps prédéterminée est par exemple stockée dans la mémoire MEM de l'équipement CPE.

Comme expliqué précédemment, les données de connexion générées au niveau de l'équipement CPE sont relatives à un ou plusieurs horaires de connexion de l'équipement CPE au réseau RES au cours de la période de temps prédéterminée. Les données de connexion générées au niveau de l'équipement CPE peuvent également être relatives à une quantité de données reçues par l'équipement CPE en provenance du réseau RES au cours de la période de temps prédéterminée.

En d'autres termes, si l'utilisateur de l'équipement CPE se connecte au réseau RES à un horaire précis pendant la période de temps prédéterminée et reste connecté pendant une certaine durée, les données de connexion générées par l'équipement CPE seront relatives à de telles informations. De même, si ce même utilisateur reçoit, via l'équipement CPE, une certaine quantité de données pendant la période de temps prédéterminée, les données de connexion générées par l'équipement CPE peuvent également être relatives à cette information.

Dans un mode de réalisation particulier, les données de connexion générées par l'équipement CPE au cours d'une pluralité de périodes de temps prédéterminées sont associées, au sein de la mémoire MEM, à un profil prédéterminé. Ce profil prédéterminé est représentatif des données de connexion générées.

Par ailleurs, dans un mode de réalisation, chaque équipement, donc l'équipement CPE, et le serveur de gestion S_GES communiquent selon le protocole de communication TR-069. Les données de connexion sont alors transmises au serveur de gestion S_GES dans une « *inform request ».*

Lors d'une étape S2, l'équipement CPE transmet les données de connexion générées à destination du serveur de gestion S_GES. Par exemple, l'équipement CPE transmet les données générées à intervalle de temps régulier à destination du serveur de gestion S_GES. Avantageusement, l'intervalle de temps correspond à la période de temps prédéterminée. Plus exactement, les données de connexion sont émises par le module de communication COM de l'équipement CPE.

Alternativement, dans le mode de réalisation dans lequel les données de connexion générées au cours d'une pluralité de périodes de temps prédéterminées sont associées à un profil prédéterminé au sein de la mémoire MEM de l'équipement CPE, l'équipement CPE transmet le profil associé à destination de l'équipement CPE. En d'autres termes, au lieu de transmettre les données de connexion chaque fois qu'elles sont générées, l'équipement CPE stocke, par exemple dans la mémoire MEM, les données de connexion générées sur plusieurs périodes de temps prédéterminées de manière à réduire les échanges avec le serveur de gestion S_GES. Avantageusement, le nombre de périodes de temps prédéterminées couvre une durée supérieure ou égale à 24 heures.

Lors d'une étape S3, le serveur de gestion S_GES détermine une plage horaire, propre à chaque équipement, et notamment l'équipement CPE, de mise à jour du micrologiciel FW, la plage horaire propre à un équipement étant fonction au moins des données de connexion de l'équipement considéré. Bien entendu, dans le mode de réalisation dans lequel un équipement transmet un profil associé aux données de connexion générées, la plage horaire propre à cet équipement est déterminée en fonction de ce profil, et donc des données de connexion générées.

Par exemple, dans le cas où l'ensemble d'au moins un équipement comprend au moins deux équipements, la plage horaire propre à un équipement peut est déterminée en outre en fonction des données de connexion des autres équipements.

Avantageusement, la plage horaire propre à un équipement est déterminée en outre en fonction de capacités du serveur de téléchargement relatives à un débit maximal de transmission de données du serveur de téléchargement.

Ces deux caractéristiques permettent de tenir compte des capacités du serveur de téléchargement S_DWL, notamment lorsque celui-ci est sollicité pour la mise à jour du micrologiciel d'un nombre important d'équipements tels que l'équipement CPE.

Dans un ou plusieurs modes de réalisation, le serveur de gestion S_GES utilise une fonction prédéterminée pour déterminer, pour chaque équipement émetteur de données de connexion, une plage horaire provisoire en fonction des données de connexion générées et émises par l'équipement CPE en question. La fonction prédéterminée permet d'attribuer, à une plage horaire potentielle donnée, une valeur d'un paramètre représentatif de la sollicitation ou de l'utilisation de l'équipement CPE pendant la plage horaire en question. En d'autres termes, la plateforme de gestion calcule, pour chaque équipement et pour chaque plage horaire d'une pluralité de plages horaires potentielles, une valeur du paramètre représentatif de l'utilisation d'un équipement donné pendant une plage horaire donnée de la pluralité de plages horaires potentielles. La durée d'une plage horaire potentielle correspond par exemple à la période de temps prédéterminée. La durée d'une plage horaire potentielle peut également correspondre à une pluralité de périodes de temps prédéterminées.

La fonction prédéterminée a par exemple pour entrée le débit de données, exprimé par exemple en octets par seconde, reçues en moyenne par l'équipement pendant la plage horaire donnée. Le débit de données correspond, pour une plage horaire donnée, à la quantité de données reçues, exprimée par exemple en octets, divisée par la durée de la plage horaire donnée, exprimée par exemple en secondes.

Par ailleurs, étant donné que la plage horaire à déterminer est la plage horaire au cours de laquelle le micrologiciel FW sera mis à jour, il est avantageux que la plage horaire ait une durée minimale. Cette durée minimale est par exemple fonction des capacités du serveur de téléchargement S_DWL. Cette durée minimale est par exemple fonction en outre des capacités de l'équipement considéré. Avantageusement, cette durée minimale est également fonction des données de connexion des autres équipements lorsque plusieurs équipements sont concernés par la mise à jour du micrologiciel FW.

La fonction prédéterminée permet, pour un équipement donné, d'assigner une valeur du paramètre représentatif d'une utilisation de l'équipement à plusieurs plages horaires données, ces plages horaires ayant une durée supérieure ou égale à une durée minimale fonction des capacités du serveur de téléchargement S_DWL et, éventuellement, des capacités de l'équipement donné. Par exemple, plus la valeur associée une plage horaire donnée est faible, moins l'équipement donné est sollicité, en moyenne, pendant cette plage horaire. Cette plage horaire donnée est alors la plus susceptible d'être sélectionnée par le serveur de gestion S_GES comme plage horaire propre à l'équipement donné pour le téléchargement de la mise à jour du micrologiciel FW.

Ainsi, pour chaque équipement, le serveur de gestion S_GES sélectionne la plage horaire associée à la valeur la plus faible. Cette plage horaire est appelée dans la suite de la description «plage horaire de valeur minimale ». On comprend ici que le serveur de gestion S_GES sélectionne, pour chaque équipement, la plage horaire correspondant à la plus faible utilisation de l'équipement, c'est-à-dire la plage horaire de valeur minimale.

Comme expliqué précédemment, le serveur de gestion S_GES et le serveur de téléchargement sont typiquement connectés à une pluralité d'équipements tels que l'équipement CPE. L'ensemble des plages horaires de valeur minimale respectives des équipements permet de définir un *planning* (aussi appelé « emploi du temps » ou « agenda ») de mise à jour de l'ensemble d'équipements. Avantageusement, donc, la plage horaire propre à un équipement est fonction non seulement des données de connexion de l'équipement considéré mais aussi des données de connexion des autres équipements. Ainsi, la charge peut être réduite sur le serveur de téléchargement S_DWL.

En effet, les plages horaires de valeur minimale respectives des équipements sont susceptibles de se chevaucher sur la période de temps totale du *planning.* Ainsi, si les plages horaires de valeur minimale respectives de deux équipements se chevauchent, cela signifie que le serveur de téléchargement S_DWL sera potentiellement amené à mettre en œuvre la mise à jour du micrologiciel FW de ces deux équipements en même temps pendant l'intervalle de temps sur lequel les deux plages horaire de valeur minimale se chevauchent. Dans un tel cas, le serveur de téléchargement S_DWL est donc particulièrement sollicité. Le raisonnement est bien entendu le même lorsque plus de deux plages horaires de valeur minimale se chevauchent.

Pour réduire la charge sur le serveur de téléchargement S_DWL tout en prenant en compte les différents équipements et les utilisations diverses de ces derniers, le serveur de gestion S_GES peut appliquer un critère supplémentaire. Par exemple, ce critère consiste à déterminer, pour un instant donné, la charge potentielle sur le serveur de téléchargement S_DWL. Le serveur de gestion S_GES détermine donc, en chaque instant d'une pluralité d'instants du *planning,* un indice de sollicitation potentielle du serveur de téléchargement S_DWL à l'instant considéré. Cet indice est déterminé en fonction des valeurs respectives de plages horaires sélectionnées, donc les plages horaires de valeur minimale, comprenant l'instant considéré. En d'autres termes, le serveur de gestion S_GES parcourt la période de temps totale, c'est-à-dire l'ensemble des plages horaires à valeur minimale respectives des équipements et détermine, à chaque instant d'une pluralité d'instants du *planning,* si l'indice correspondant est supérieur ou égale à un seuil prédéterminé. Par exemple, l'indice correspond à la somme des valeurs des plages horaires à valeur minimale contenant l'instant considéré. On comprend ici que les instants à cibler en particulier sont ceux en lesquels plusieurs plages horaires de valeur minimale se chevauchent, ce qui signifie que les mises à jour des équipements concernés seraient amenées à être mises en œuvre par le serveur de téléchargement S_DWL en même temps au moins en ces instants communs.

Lorsque ce seuil prédéterminé est dépassé pour un instant donné, cela signifie qu'un nombre trop important de plages horaires à valeur minimale se chevauchent au moins en cet instant de sorte que des mises à jour conjointes du micrologiciel des équipements associés nécessitent des ressources trop importantes pour le serveur de téléchargement S_DWL.

Par ailleurs, comme expliqué précédemment, un autre critère à vérifier peut aussi être basé sur les capacités du serveur de téléchargement S_DWL. Il est alors possible de fixer un nombre maximal de plages horaires pouvant se chevaucher en un même instant pour éviter que le serveur de téléchargement S_DWL n'ait à mettre en œuvre la mise à jour d'un nombre trop élevé d'équipements en même temps. Alors que le critère précédemment évoqué est basé sur l'utilisation des équipements par les utilisateurs, celui-ci est orienté côté serveur de téléchargement S_DWL et est directement lié à ses capacités propres, notamment le débit maximal de transmission de données.

Avantageusement, lorsqu'un critère n'est pas respecté, le serveur de gestion S_GES peut alors remplacer la plage horaire à valeur minimale d'un des équipements impliqués par une autre plage horaire. Par exemple, la plage horaire à valeur minimale d'un équipement est remplacée par une plage horaire dont la valeur, calculée à l'aide la fonction prédéterminée, est la plus petite valeur supérieure à la valeur minimale. En d'autres termes, la deuxième « meilleure » plage horaire d'un équipement concerné est sélectionnée. Puis, le serveur de gestion S_GES parcourt à nouveau la période de temps totale en appliquant de nouveau le critère décrit précédemment et en remplaçant la période de temps à valeur minimale d'un des équipements par la nouvelle plage horaire sélectionnée. En d'autres termes, lorsque l'indice est supérieur à un seul prédéterminé en un instant donné du *planning,* une des plages horaires comprenant l'instant est remplacée par une autre plage horaire, cette autre plage horaire étant sélectionnée en fonction de la valeur du paramètre représentatif d'une utilisation de l'équipement concerné pendant cette autre plage horaire.

Lorsque, pour tout instant de cette période de temps totale, le critère est vérifié, à savoir que la charge sur le serveur de téléchargement S_DWL ne dépasse jamais le seuil prédéterminé, alors les plages horaires obtenues sont les plages horaires propres aux équipements.

Lors d'une étape S4, le serveur de gestion S_GES transmet, à chaque équipement, une information relative à la plage horaire propre à chaque équipement. Par exemple, l'équipement CPE illustré en **Figure 1** reçoit, en provenance du serveur de gestion S_GES, l'information relative à la plage horaire, qui lui est propre, de mise à jour du logiciel FW. Cette information est par exemple reçue par le module de communication COM est stockée dans la mémoire MEM de l'équipement CPE.

Lors d'une étape S5, l'équipement CPE est dans l'attente de la détection du début de la plage horaire de téléchargement de la mise à jour du micrologiciel FW. La plage horaire est en effet caractérisée par un horaire de début de mise à jour et un horaire de fin de mise à jour, de sorte que l'équipement CPE est dans l'attente, au cours de cette étape, de l'horaire de début de mise à jour.

Lors d'une étape S6, déclenchée par la détection de l'horaire de début de mise à jour, donc le début de la plage horaire propre à l'équipe CPE, l'équipement CPE émet, selon un mode de réalisation particulier, une requête d'ouverture de session à destination du serveur de gestion S_GES. Plus exactement, la requête d'ouverture de session est émise par le module de communication COM.

Lors d'une étape S7, sur réception de la requête d'ouverture de session émise par l'équipement CPE, le serveur de gestion S_GES émet, à destination de l'équipement CPE, une information relative à une adresse du serveur de téléchargement S_DWL en vue de mettre à jour le micrologiciel FW au sein de l'équipement CPE. Cette information relative à l'adresse du serveur de téléchargement S_DWL est par exemple reçue par le module de communication COM et stockée dans la mémoire MEM de l'équipement CPE.

Il convient de préciser ici que l'étape d'émission d'une requête d'ouverture d'une session est optionnelle et que le serveur de gestion S_GES peut transmettre directement l'information relative à l'adresse du serveur de téléchargement S_DWL à destination de l'équipement CPE. Cette information peut être, par exemple, émise avec l'information relative à la plage horaire propre à l'équipement CPE ou être émise avant.

Lors d'une étape S8, l'équipement CPE émet une requête de téléchargement de la mise à jour du micrologiciel FW à destination du serveur de téléchargement S_DWL associé à l'adresse reçue. Cette requête de téléchargement est par exemple émise par le module de communication COM et comprend l'adresse du serveur de téléchargement afin que la requête puisse être routée à destination du serveur de téléchargement S_DWL.

Lors d'une étape S9, sur réception de la requête de téléchargement émise par l'équipement CPE, le serveur de téléchargement S_DWL émet des données de téléchargement de la mise à jour du micrologiciel à destination de chaque équipement émetteur d'une requête de téléchargement. En particulier ici, le serveur de téléchargement S_DWL émet les données de téléchargement à destination de l'équipement CPE pour le téléchargement de la mise à jour du micrologiciel FW Ces données de téléchargement sont par exemple reçues par le module de communication COM.

Enfin, lors d'une étape S10, l'équipement CPE télécharge la mise à jour du micrologiciel FW. La mise à jour est mise en œuvre pendant la plage horaire propre à l'équipement CPE. Plus généralement, la mise à jour du micrologiciel est téléchargée, au sein de chaque équipement récepteur des données de téléchargement.

L'invention présente plusieurs avantages.

Tout d'abord, la détermination d'une plage horaire de téléchargement de la mise à jour du micrologiciel propre à chaque équipement connecté au réseau permet de réduire la charge sur le serveur de téléchargement. Ainsi, la mise à jour des micrologiciels respectifs des nombreux équipements peut être étalée dans le temps de sorte que les capacités du serveur de téléchargement sont moins sollicitées.

En outre, la détermination d'une plage horaire propre à chaque équipement permet de personnaliser la procédure de mise à jour du micrologiciel et, avantageusement, de ne mobiliser l'équipement que sur une plage horaire au cours de laquelle l'équipement a l'habitude d'être peu ou pas sollicité par un utilisateur.

## Revendications

1. Procédé de gestion à distance d'un ensemble d'au moins un équipement (CPE) de connexion à un réseau (RES) en vue de mettre à jour un micrologiciel (FW) au sein de chaque équipement, le procédé étant mis en œuvre par des moyens informatiques et comprenant:
- générer (S1), au niveau de chaque équipement, des données de connexion dudit équipement au réseau sur une période de temps prédéterminée,
- déterminer (S3), au niveau d'un serveur de gestion (S_GES) distant, une plage horaire, propre à chaque équipement, de mise à jour du micrologiciel, la plage horaire propre à un équipement étant fonction au moins des données de connexion dudit équipement,
- transmettre (S4), à chaque équipement, une information relative à la plage horaire propre audit équipement,
- transmettre (S7), à chaque équipement, une information relative à une adresse d'un serveur de téléchargement (S_DWL) en vue de mettre à jour le micrologiciel au sein dudit équipement,
- émettre (S8), en provenance de chaque équipement, une requête de téléchargement de la mise à jour du micrologiciel à destination du serveur de téléchargement associé à l'adresse reçue,
- émettre (S9), en provenance du serveur de téléchargement, des données de téléchargement de la mise à jour du micrologiciel à destination de chaque équipement émetteur d'une requête de téléchargement, et
- télécharger (S10), au sein de chaque équipement récepteur desdites données de téléchargement, la mise à jour du micrologiciel pendant la plage horaire propre audit équipement.

2. Procédé selon la revendication 1, dans lequel les données de connexion générées par un équipement sont transmises (S2) à intervalles de temps réguliers au serveur de gestion, chaque intervalle de temps correspondant à la période de temps prédéterminée.

3. Procédé selon la revendication 1, dans lequel les données de connexion générées par un équipement au cours d'une pluralité de périodes de temps prédéterminées sont associées à un profil au niveau dudit équipement, ledit profil étant sélectionné dans une mémoire (MEM) stockant des profils prédéterminés puis transmis (S2) au serveur de gestion.

4. Procédé selon l'une des revendications précédentes, dans lequel la transmission à un équipement de l'information relative à l'adresse du serveur de téléchargement est consécutive à l'émission, en provenance dudit équipement, d'une requête d'ouverture de session à destination du serveur de gestion, ladite requête d'ouverture de session étant émise sur détection, par ledit équipement, du début de la plage horaire propre audit équipement.

5. Procédé selon l'une quelconque des revendications précédentes, dans lequel chaque équipement et le serveur de gestion communiquent selon le protocole de communication TR-069, les données de connexion étant transmises au serveur de gestion dans une « *inform request* ».

6. Procédé selon l'une des revendications précédentes, dans lequel les données de connexion générées au niveau d'un équipement sont relatives à un ou plusieurs horaires de connexion dudit équipement au réseau au cours de la période de temps prédéterminée.

7. Procédé selon l'une des revendications précédentes, dans lequel les données de connexion générées au niveau d'un équipement sont relatives à une quantité de données reçues par ledit équipement en provenance du réseau au cours de la période de temps prédéterminée.

8. Procédé selon l'une des revendications précédentes, dans lequel la plage horaire propre à un équipement est déterminée en fonction de capacités du serveur de téléchargement relatives à un débit maximal de transmission de données du serveur de téléchargement.

9. Procédé selon l'une des revendications précédentes, l'ensemble d'au moins un équipement comprenant au moins deux équipements, dans lequel la plage horaire propre à un équipement est déterminée en outre en fonction des données de connexion de l'autre ou des autres équipements.

10. Procédé selon la revendication 9, dans lequel la détermination de la plage horaire de mise à jour du micrologiciel propre à chaque équipement comprend :
- calculer, pour chaque équipement et pour chaque plage horaire d'une pluralité de plages horaires potentielles, une valeur d'un paramètre représentatif d'une utilisation dudit équipement pendant la plage horaire considérée en fonction des données de connexion générées par ledit équipement,
- sélectionner, pour chaque équipement, la plage horaire correspondant à la plus faible utilisation dudit équipement, l'ensemble des plages horaires sélectionnées formant un *planning* de mise à jour de l'ensemble d'équipements,
- déterminer, en chaque instant d'une pluralité d'instants du *planning,* un indice de sollicitation potentielle du serveur de téléchargement audit instant, ledit indice étant fonction des valeurs respectives de plages horaires sélectionnées comprenant ledit instant, et
- lorsque ledit indice est supérieur à un seul prédéterminé en un instant donné du *planning,* remplacer une des plages horaires comprenant ledit instant par une autre plage horaire, ladite autre plage horaire étant sélectionnée en fonction de la valeur du paramètre représentatif d'une utilisation de l'équipement concerné pendant ladite autre plage horaire.

11. Procédé selon la revendication 10, dans lequel la valeur du paramètre représentatif d'une utilisation d'un équipement pendant une plage horaire donnée est calculée en fonction au moins de la quantité de données reçues par ledit équipement pendant ladite plage horaire.

12. Programme informatique comprenant des instructions pour la mise en œuvre du procédé selon l'une des revendications précédentes, lorsque lesdites instructions sont exécutées par au moins un processeur (PROC).

13. Equipement (CPE) de connexion à un réseau (RES) comprenant un micrologiciel (FW), ledit équipement comprenant en outre un processeur (PROC) et un module de communication (COM) configurés pour :
- générer (S1) des données de connexion dudit équipement au réseau sur une période de temps prédéterminée,
- recevoir (S4) une information relative à une plage horaire, propre audit équipement, de téléchargement d'une mise à jour du micrologiciel (FW) au sein dudit équipement
- recevoir (S7) une information relative à une adresse d'un serveur de téléchargement (S_DWL) en vue de télécharger la mise à jour du micrologiciel,
- émettre (S8) une requête de téléchargement de la mise à jour du micrologiciel à destination du serveur de téléchargement associé à l'adresse reçue,
- recevoir (S9), en provenance du serveur de téléchargement, des données de téléchargement de la mise à jour du micrologiciel, et
- télécharger (S10) la mise à jour du micrologiciel pendant la plage horaire propre audit équipement.

14. Serveur de gestion (S_GES) à distance d'un ensemble d'au moins un équipement (CPE) de connexion à un réseau (RES) en vue de mettre à jour un micrologiciel (FW) au sein de chaque équipement, le serveur de gestion étant configuré pour:
- recevoir (S2), en provenance de chaque équipement, des données de connexion dudit équipement au réseau sur une période de temps prédéterminée,
- déterminer (S3) une plage horaire, propre à chaque équipement, de mise à jour du micrologiciel, la plage horaire propre à un équipement étant fonction au moins des données de connexion dudit équipement,
- transmettre (S4), à chaque équipement, une information relative à la plage horaire propre audit équipement, et
- transmettre (S7), à chaque équipement, une information relative à une adresse d'un serveur de téléchargement (S_DWL) en vue de télécharger la mise à jour du micrologiciel au sein de chaque équipement pendant la plage horaire propre à chaque équipement.

15. Système (SYS) comprenant un ensemble d'au moins un équipement (CPE) de connexion à un réseau (RES) selon la revendication 13 et un serveur de gestion (S_GES) à distance de l'ensemble d'au moins un équipement de connexion au réseau selon la revendication 14.

16. Système selon la revendication 15, comprenant en outre un serveur de téléchargement (S_DWL) configuré pour, sur réception d'une requête de téléchargement de la mise à jour du micrologiciel émise par un équipement de l'ensemble d'au moins un équipement, émettre des données de téléchargement de la mise à jour du micrologiciel à destination dudit équipement.

## Patentansprüche

1. Remote-Verwaltungsverfahren einer Einheit von mindestens einem Gerät (CPE) für die Verbindung mit einem Netz (RES) zur Aktualisierung einer Firmware (FW) innerhalb jedes Geräts, wobei das Verfahren von Informatikeinrichtungen durchgeführt wird und enthält:
- Generieren (S1), auf der Ebene jedes Geräts, von Verbindungsdaten des Geräts mit dem Netz über einen vorbestimmten Zeitraum,
- Bestimmen (S3), auf der Ebene eines Remote-Verwaltungsservers (S_GES), einer jedem Gerät eigenen Zeitspanne der Aktualisierung der Firmware, wobei die einem Gerät eigene Zeitspanne mindestens von den Verbindungsdaten des Geräts abhängt,
- Übertragen (S4), an jedes Gerät, einer Information bezüglich der dem Gerät eigenen Zeitspanne,
- Übertragen (S7), an jedes Gerät, einer Information bezüglich einer Adresse eines Download-Servers (S_DWL), um die Firmware innerhalb des Geräts zu aktualisieren,
- Senden (S8), ausgehend von jedem Gerät, einer Download-Anforderung der Aktualisierung der Firmware an den der empfangenen Adresse zugeordneten Download-Server,
- Senden (S9), ausgehend vom Download-Server, von Download-Daten der Aktualisierung der Firmware an jedes Gerät, das eine Download-Anforderung gesendet hat,
- Downloaden (S10), innerhalb jedes Geräts, das die Download-Daten empfängt, der Aktualisierung der Firmware während der dem Gerät eigenen Zeitspanne.

2. Verfahren nach Anspruch 1, wobei die von einem Gerät generierten Verbindungsdaten in gleichmäßigen Zeitintervallen an den Verwaltungsserver übertragen werden (S2), wobei jedes Zeitintervall dem vorbestimmten Zeitraum entspricht.

3. Verfahren nach Anspruch 1, wobei die während einer Vielzahl von vorbestimmten Zeiträumen von einem Gerät generierten Verbindungsdaten einem Profil auf der Ebene des Geräts zugeordnet sind, wobei das Profil in einem Speicher (MEM) ausgewählt wird, der vorbestimmte Profile speichert, und dann an den Verwaltungsserver übertragen wird (S2).

4. Verfahren nach einem der vorhergehenden Ansprüche, wobei die Übertragung der Information bezüglich der Adresse des Download-Servers an ein Gerät auf das Senden einer Sitzungseröffnungsanforderung vom Gerät an den Verwaltungsserver folgt, wobei die Sitzungseröffnungsanforderung nach der Erfassung des Beginns der dem Gerät eigenen Zeitspanne durch das Gerät gesendet wird.

5. Verfahren nach einem der vorhergehenden Ansprüche, wobei jedes Gerät und der Verwaltungsserver gemäß dem Kommunikationsprotokoll TR-069 kommunizieren, wobei die Verbindungsdaten in einer *"inform request"* an den Verwaltungsserver übertragen werden.

6. Verfahren nach einem der vorhergehenden Ansprüche, wobei die auf der Ebene eines Geräts generierten Verbindungsdaten sich auf eine oder mehrere Verbindungszeiten des Geräts mit dem Netz während des vorbestimmten Zeitraums beziehen.

7. Verfahren nach einem der vorhergehenden Ansprüche, wobei die auf der Ebene eines Geräts generierten Verbindungsdaten sich auf eine Menge von Daten beziehen, die ausgehend vom Netz während des vorbestimmten Zeitraums vom Gerät empfangen werden.

8. Verfahren nach einem der vorhergehenden Ansprüche, wobei die einem Gerät eigene Zeitspanne abhängig von Kapazitäten des Download-Servers bezüglich einer maximalen Datenübertragungsrate des Download-Servers bestimmt wird.

9. Verfahren nach einem der vorhergehenden Ansprüche, wobei die Einheit mindestens eines Geräts mindestens zwei Geräte enthält, wobei die einem Gerät eigene Zeitspanne außerdem abhängig von den Verbindungsdaten des einen oder der anderen Geräte bestimmt wird.

10. Verfahren nach Anspruch 9, wobei die Bestimmung der Aktualisierungszeitspanne der jedem Gerät eigenen Firmware enthält:
- Berechnen, für jedes Gerät und für jede Zeitspanne einer Vielzahl möglicher Zeitspannen, eines Werts eines für eine Benutzung des Geräts während der betreffenden Zeitspanne repräsentativen Parameters abhängig von den vom Gerät generierten Verbindungsdaten,
- Auswahl, für jedes Gerät, der Zeitspanne entsprechend der schwächsten Benutzung des Geräts, wobei die Einheit der ausgewählten Zeitspannen eine Planung einer Aktualisierung der Einheit von Geräten bildet,
- Bestimmen, zu jedem Zeitpunkt einer Vielzahl von Zeitpunkten der Planung, eines Index möglicher Beanspruchung des Download-Servers zu dem Zeitpunkt, wobei der Index von den jeweiligen Werten von ausgewählten Zeitspannen abhängt, die den Zeitpunkt enthalten, und
- wenn der Index höher ist als ein einziger vorbestimmter zu einem gegebenen Zeitpunkt der Planung, Ersetzen einer der den Zeitpunkt enthaltenden Zeitspannen durch eine andere Zeitspanne, wobei die andere Zeitspanne abhängig vom Wert des für eine Benutzung des betreffenden Geräts während der anderen Zeitspanne repräsentativen Parameters ausgewählt wird.

11. Verfahren nach Anspruch 10, wobei der Wert des für eine Benutzung eines Geräts während einer gegebenen Zeitspanne repräsentativen Parameters abhängig von mindestens der Menge von von dem Gerät während der Zeitspanne empfangenen Daten berechnet wird.

12. Informatikprogramm, das Anweisungen zur Durchführung des Verfahrens nach einem der vorhergehenden Ansprüche enthält, wenn die Anweisungen von mindestens einem Prozessor (PROC) ausgeführt werden.

13. Gerät (CPE) zur Verbindung mit einem Netz (RES), das eine Firmware (FW) enthält, wobei das Gerät außerdem einem Prozessor (PROC) und ein Kommunikationsmodul (COM) enthält, die konfiguriert sind, um:
- Verbindungsdaten des Geräts mit dem Netz über einen vorbestimmten Zeitraum zu generieren (S1),
- eine Information bezüglich einer dem Gerät eigenen Zeitspanne des Downloadens einer Aktualisierung der Firmware (FW) innerhalb des Geräts zu empfangen (S4),
- eine Information bezüglich einer Adresse eines Download-Servers (S_DWL) zum Downloaden der Aktualisierung der Firmware zu empfangen (S7),
- eine Download-Anforderung der Aktualisierung der Firmware an den der empfangenen Adresse zugeordneten Download-Server zu senden (S8),
- Download-Daten der Aktualisierung der Firmware vom Download-Server zu empfangen (S9), und
- die Aktualisierung der Firmware während der dem Gerät eigenen Zeitspanne downzuloaden (S10).

14. Remote-Verwaltungsserver (S_GES) einer Einheit von mindestens einem Gerät (CPE) zur Verbindung mit einem Netz (RES), um eine Firmware (FW) innerhalb jedes Geräts zu aktualisieren, wobei der Verwaltungsserver konfiguriert ist, um:
- ausgehend von jedem Gerät Verbindungsdaten des Geräts mit dem Netz über einen vorbestimmten Zeitraum zu empfangen (S2),
- eine dem Gerät eigene Zeitspanne der Aktualisierung der Firmware zu bestimmen (S3), wobei die einem Gerät eigene Zeitspanne mindestens von den Verbindungsdaten des Geräts abhängt,
- an jedes Gerät eine Information bezüglich der dem Gerät eigenen Zeitspanne zu übertragen (S4), und
- an jedes Gerät eine Information bezüglich einer Adresse eines Download-Servers (S_DWL) zu übertragen (S7), um die Aktualisierung der Firmware innerhalb jedes Geräts während der jedem Gerät eigenen Zeitspanne downzuloaden.

15. System (SYS), das eine Einheit von mindestens einem Gerät (CPE) zur Verbindung mit einem Netz (RES) nach Anspruch 13 und einen Remote-Verwaltungsserver (S_GES) der Einheit von mindestens einem Gerät zur Verbindung mit dem Netz nach Anspruch 14 enthält.

16. System nach Anspruch 15, das außerdem einen Download-Server (S_DWL) enthält, der konfiguriert ist, um nach Empfang einer Download-Anforderung der Aktualisierung der Firmware, die von einem Gerät der Einheit von mindestens einem Gerät gesendet wird, Download-Daten der Aktualisierung der Firmware an das Gerät zu senden.

## Claims

1. Method for remotely managing a set of at least one equipment (CPE) for connection to a network (RES) with a view to updating a firmware (FW) within each equipment, the method being implemented by computing means and comprising:
- generating (S1), at the level of each equipment, data on the connection of said equipment to the network over a predetermined period of time,
- determining (S3), at the level of a remote management server (S_GES), a time slot, specific to each equipment, for updating the firmware, the time slot specific to an equipment being dependent at least on the data on the connection of said equipment,
- transmitting (S4), to each equipment, information relating to the time slot specific to said equipment,
- transmitting (S7), to each equipment, information relating to an address of a download server (S_DWL) with a view to updating the firmware within said equipment,
- sending (S8), from each equipment, a request to download the update to the download server associated with the received address,
- sending (S9), from the download server, firmware update download data to each equipment sending a download request, and
- downloading (S10), within each equipment receiving said download data, the firmware update in the time slot specific to said equipment.

2. Method according to Claim 1, wherein the connection data generated by an equipment are transmitted (S2) at regular time intervals to the management server, each time interval corresponding to the predetermined period of time.

3. Method according to Claim 1, wherein the connection data generated by an equipment during a plurality of predetermined periods of time are associated with a profile at the level of said equipment, said profile being selected in a memory (MEM) storing profiles that are predetermined then transmitted (S2) to the management server.

4. Method according to one of the preceding claims, wherein the transmission to an equipment of the information relating to the address of the download server is consecutive to the transmission, from said equipment, of a request to open a session to the management server, said request to open a session being sent upon detection, by said equipment, of the start of the time slot specific to said equipment.

5. Method according to any one of the preceding claims, wherein each equipment and the management server communicate according to the TR-069 communication protocol, the connection data being transmitted to the management server in an "inform request".

6. Method according to one of the preceding claims, wherein the connection data generated at the level of an equipment relate to one or more times of connection of said equipment to the network during the predetermined period of time.

7. Method according to one of the preceding claims, wherein the connection data generated at the level of an equipment relate to a quantity of data received by said equipment from the network during the predetermined period of time.

8. Method according to one of the preceding claims, wherein the time slot specific to an equipment is determined according to the capacities of the download server relating to a maximum data transmission rate of the download server.

9. Method according to one of the preceding claims, the set of at least one equipment comprising at least two equipments, wherein the time slot specific to an equipment is further determined according to the data on the connection of the one or more other equipments.

10. Method according to Claim 9, wherein the determination of the time slot for updating the firmware specific to each equipment comprises:
- calculating, for each equipment and for each time slot of a plurality of potential time slots, a value of a parameter representative of a use of said equipment in the time slot in question according to the connection data generated by said equipment,
- selecting, for each equipment, the time slot corresponding to the lowest use of said equipment, the set of selected time slots forming a schedule for updating all of the equipments,
- determining, at each time of a plurality of times of the schedule, an index of potential demand for the download server at said time, said index being dependent on the respective values of selected time slots comprising said time, and
- when said index is higher than a predetermined threshold at a given time of the schedule, replacing one of the time slots comprising said time with another time slot, said other time slot being selected according to the value of the parameter representative of a use of the equipment in question in said other time slot.

11. Method according to Claim 10, wherein the value of the parameter representative of a use of an equipment in a given time slot is calculated according at least to the quantity of data received by said equipment in said time slot.

12. Computer program comprising instructions for implementing the method according to one of the preceding claims, when said instructions are executed by at least one processor (PROC).

13. Equipment (CPE) for connection to a network (RES) comprising a firmware (FW), said equipment further comprising a processor (PROC) and a communication module (COM) configured for:
- generating (S1) data on the connection of said equipment to the network over a predetermined period of time,
- receiving (S4) information relating to a time slot, specific to said equipment, for downloading a firmware (FW) update within said equipment,
- receiving (S7) information relating to an address of a download server (S_DWL) with a view to downloading the firmware update,
- sending (S8) a request to download the firmware update to the download server associated with the received address,
- receiving (S9), from the download server, firmware update download data, and
- downloading (S10) the firmware update in the time slot specific to said equipment.

14. Remote management server (S_GES) for remotely managing a set of at least one equipment (CPE) for connection to a network (RES) with a view to updating a firmware (FW) within each equipment, the management server being configured for:
- receiving (S2), from each equipment, data on the connection of said equipment to the network over a predetermined period of time,
- determining (S3) a time slot, specific to each equipment, for updating the firmware, the time slot specific to an equipment being dependent at least on the data on the connection of said equipment,
- transmitting (S4), to each equipment, information relating to the time slot specific to said equipment, and
- transmitting (S7), to each equipment, information relating to an address of a download server (S_DWL) with a view to downloading the firmware update within each equipment in the time slot specific to each equipment.

15. System (SYS) comprising a set of at least one equipment (CPE) for connection to a network (RES) according to Claim 13 and a remote management server (S_GES) for remotely managing the set of at least one equipment for connection to the network according to Claim 14.

16. System according to Claim 15, further comprising a download server (S_DWL) configured for, upon receiving a request to download the firmware update sent by an equipment of the set of at least one equipment, sending firmware update download data to said equipment.
